# EUROPÄISCHE PATENTSCHRIFT

(11) **EP 2 581 184 B1**
(45) Veröffentlichungstag und Bekanntmachung des Hinweises auf die Patenterteilung: **04.05.2016**
(21) Anmeldenummer: 12008118.7
(22) Anmeldetag: 04.05.2012
(51) Int. Cl.: B26D 3/18, B26D 3/26, A47J 43/07, B26D 1/30, B26D 5/10, B26D 7/06

(54) **LEBENSMITTELZERKLEINERUNGSVORRICHTUNG**
DEVICE FOR CUTTING FOOD ARTICLES
DISPOSITIF DE COUPE DES ARTICLES ALIMENTAIRES

(30) Priorität: 05.05.2011 DE 202011050041 U
(43) Veröffentlichungstag der Anmeldung: 17.04.2013
(62) Teilanmeldung aus: 12722073.9
(73) Patentinhaber: Genius GmbH, 65549 Limburg (DE)
(72) Erfinder: Repac, Cedomir, 65611 Brechen (DE)
(74) Vertreter: Hoffmann, Jürgen

(56) Entgegenhaltungen:
- EP-A1- 0 570 153
- EP-B1- 0 570 153
- CH-A- 359 253
- DE-A1-102009 023 167
- US-A- 1 263 151
- US-A- 1 656 415
- US-A- 2 093 755
- US-A1- 2009 193 981

## Beschreibung

Die Erfindung betrifft eine Lebensmittelzerkleinerungsvorrichtung mit einem Schneideinsatz mit einer ersten Schneidklingenanordnung. Die Lebensmittelzerkleinerungsvorrichtung weist einen schwenkbaren Pressstempel zum Hindurchdrücken von zu zerkleinerndem Gut durch den Schneideinsatz auf, wobei die erste Schneidklingenanordnung in einem ersten Bereich des Schneideinsatzes angeordnet ist und ein zweiter, von dem ersten Bereich verschiedener Bereich eine zweite Schneidklingenanordnung aufweist.

Aus DE 102009023167 A1 ist eine Vorrichtung zum Schneiden von Nahrungsmitteln, wie Obst und Gemüse, mit einem mehrere Schneiden aufweisenden Schneidteil und einem Betätigungsteil, welche gegeneinander verschwenkbar gelagert sind, bekannt. Zum Schneiden des Schneidgutes wird das Betätigungsteil gegen das Schneidteil geschwenkt. Das Betätigungsteil weist einen Stempel auf, der das Schneidgut durch das Schneidteil hindurchdrückt. Hierbei tauchen die Schneiden in korrespondierende Vertiefungen des Stempels ein. Das Schneidteil weist einen Schneiden haltenden Schneidrahmen auf.

Aus US 1,263,151 A ist eine Vorrichtung bekannt, bei je nach Schneidanforderung ein Schneideinsatz aus einer Vielzahl unterschiedlicher, bevorrateter Schneideinsätze in eine Zerkleinerungsvorrichtung eingelegt wird.

US 1,656,415, die die Grundlage für den Oberbegriff von Patentanspruch 1 bildet, offenbart einen Schneideinsatz mit zwei Schneidklingenanordnungen. Eine Schneidklingenanordnung weist erste Schneidklingen, die sich in Längsrichtung des Schneideinsatzes erstrecken, und zweite Schneidklingen auf, die sich quer zur Längsrichtung des Schneideinsatzes erstrecken. Die ersten und zweiten Schneidklingen greifen ineinander.

CH 359 253 A offenbart einen Schneideinsatz mit zwei unterschiedlich ausgebildeten Schneidklingenanordnungen.

US 2,093,755 A und EP 0 57 015 3 B1 offenbaren jeweils eine Vorrichtung mit einem Schneideinsatz, der eine einzige Schneidklingenanordnung aufweist.

Es ist die Aufgabe der vorliegenden Erfindung, eine Lebensmittelzerkleinerungsvorrichtung der eingangs genannten Art anzugeben, mittels der ungewöhnlich geformte Lebensmittelteile hergestellt werden können.

Die Aufgabe wird durch den Gegenstand des Anspruchs 1 gelöst.

Das Ausbilden der Lebensmittelzerkleinerungsvorrichtung derart, dass die erste Schneidklingenanordnung und/oder die zweite Schneidklingenanordnung mehrere in unterschiedlichen Ebenen übereinander - vorzugsweise unterschiedlich - angeordnete Schneidklingen aufweisen, bietet den Vorteil, dass besonders exotisch geformte Lebensmittelteile hergestellt werden können. Insbesondere kann auf diese Weise auch ein besonders feines Schneidraster zur Verfügung gestellt werden.

Der Schneideinsatz hat den ganz besonderen Vorteil, dass wahlweise entweder die erste Schneidklingenanordnung oder die zweite Schneidklingenanordnung in einer Arbeitsposition innerhalb einer Lebensmittelzerkleinerungsvorrichtung positioniert und verwendet werden kann. Wie im Folgenden noch detailliert ausgeführt wird, kann dies beispielsweise dadurch geschehen, dass der Schneideinsatz in unterschiedlichen Stellungen und/oder in unterschiedlichen Positionen an oder in einer Lebensmittelzerkleinerungsvorrichtung festlegbar ist.

Alternativ oder zusätzlich kann auch vorgesehen sein, dass - beispielsweise mit zwei separaten Pressstempeln - gleichzeitig sowohl die erste Schneidklingenanordnung, als auch die zweite Schneidklingenanordnung verwendet werden.

Bei einer besonderen Ausführungsform des Schneideinsatzes ist vorgesehen, dass die erste Schneidklingenanordnung sich von der zweiten Schneidklingenanordnung unterscheidet. Der Unterschied kann beispielsweise in einem unterschiedlichen Klingenabstand und/oder in einer unterschiedlichen Klingenorientierung und/oder in einem unterschiedlichen Klingenmuster und/oder durch die Verwendung unterschiedlicher Klingentypen begründet sein.

Beispielsweise kann die erste Schneidklingenanordnung Schneidklingen mit einer geraden Schneidkante aufweisen, während die zweite Schneidklingenanordnung Schneidklingen mit einem Wellenschliff aufweist.

Es kann beispielsweise auch vorgesehen sein, dass die erste Schneidklingenanordnung ausschließlich parallel zueinander angeordnete Schneidklingen aufweist, während die zweite Schneidklingenanordnung schachbrettartig gekreuzte Schneidklingen aufweist.

Alternativ oder zusätzlich kann beispielsweise auch vorgesehen sein, dass die erste Schneidklingenanordnung sternförmig angeordnete Schneidklingen aufweist, während die zweite Schneidklingenanordnung mit parallelen oder rautenförmig angeordneten Schneidklingen versehen ist.

Bei einer anderen Ausführungsform unterscheiden sich die Schneidklingenanordnungen nicht. Diese Ausführungsform hat den Vorteil, einer insgesamt vergrößerten Standzeit, weil zunächst die erste Schneidklingenanordnung in einer Arbeitsposition verwendet werden kann und anschließend, beispielsweise wenn die Schneidklingen der ersten Schneidklingenanordnung beschädigt sind, die zweite Schneidklingenanordnung statt der ersten Schneidklingenanordnung in der Arbeitsposition positioniert werden kann.

Bei einer besonders vorteilhaften und stabilen Ausführungsform sind die erste Schneidklingenanordnung und die zweite Schneidklingenanordnung in einem gemeinsamen Rahmen angeordnet. Insbesondere kann vorgesehen sein, dass die erste Schneidklingenanordnung und die zweite Schneidklingenanordnung voneinander beabstandet in einem gemeinsamen Rahmen angeordnet sind. Besonders vorteilhaft kann zwischen den Schneidklingenanordnungen ein Zwischensteg vorhanden sein. Dieser Zwischensteg kann insbesondere dazu ausgebildet sein, den gesamten Schneideinsatz - ggf. zusammen mit einem gemeinsamen Rahmen der Schneidklingenanordnungen - zu stabilisieren und zu versteifen.

Eine ganz besonders vorteilhafte Ausführungsform des Schneideinsatzes ist - abgesehen von möglichen Unterschieden der unterschiedlichen Schneidklingenanordnungen - symmetrisch, insbesondere spiegelsymmetrisch ausgebildet. Eine solche Ausbildungsform hat den ganz besonderen Vorteil, dass die Auswahl der zu verwendenden Schneidklingenanordnung durch einfache Auswahl der Stellung, insbesondere der Drehstellung, des Schneideinsatzes festgelegt werden kann. Insbesondere kann in diesem Sinne vorteilhaft vorgesehen sein, dass der Schneideinsatz in Bezug auf eine Spiegelebene symmetrisch ausgebildet ist, die senkrecht zu der Ebene steht, in der die Schneidklingen angeordnet sind.

Um den Schneideinsatz leicht und präzise handhaben zu können, ist bei einer besonderen Ausführungsform zumindest ein Griff und/oder ein Griffbereich vorgesehen. Ein solcher Griff kann vorteilhaft derart ausgebildet sein, dass sich der Schneidansatz leicht und sicher in einer Lebensmittelzerkleinerungsvorrichtung positionieren lässt und leicht und sicher wieder entnehmen lässt. Insbesondere kann vorgesehen sein, dass mehrere Griffe und/oder Griffbereiche vorgesehen sind, die je nach Stellung und/oder Orientierung des Schneideinsatzes in einer Lebensmittelzerkleinerungsvorrichtung unabhängig voneinander verwendet werden können.

Bei einer besonders sicher und schnell einsetzbaren Ausführungsform des Schneideinsatzes ist vorgesehen, dass dieser Verbindungselemente, insbesondere Rastvorsprünge und/oder Rastausnehmungen, aufweist, die dazu ausgebildet und bestimmt sind, mit Gegenverbindungselementen einer Lebensmittelzerkleinerungsvorrichtung zusammenzuwirken. Auf diese Weise kann der Schneideinsatz vorteilhaft durch einfaches Verrasten sicher in einer Lebensmittelzerkleinerungsvorrichtung positioniert werden.

Vorzugsweise sind die Verbindungselemente und die Gegenverbindungselemente derart ausgebildet und positioniert, dass der Schneideinsatz in unterschiedlichen Stellungen und/oder in unterschiedlichen Orientierungen in der Lebensmittelzerkleinerungsvorrichtung festlegbar ist. Insbesondere kann vorgesehen sein, dass die Verbindungselemente und/oder die Gegenverbindungselemente jeweils zueinander symmetrisch, insbesondere spiegelsymmetrisch angeordnet sind. Eine solche Ausführung erlaubt es in vorteilhafter Weise, dass die Verbindungselemente, die in einer ersten Stellung und/oder Orientierung in erste Gegenverbindungselemente eingreifen, in einer spiegelsymmetrischen Stellung in spiegelsymmetrisch angeordnete zweite Gegenverbindungselemente eingreifen und umgekehrt. Auf diese Weise ist vorteilhaft erreicht, dass nicht für jede mögliche Stellung und/oder Orientierung eigene Verbindungselemente und/oder Gegenverbindungselemente vorgesehen sein müssen. Vielmehr werden in erfindungsgemäß vorteilhafter Weise dieselben Verbindungselemente und dieselben Gegenverbindungselemente für unterschiedliche Stellungen und/oder Orientierungen des Schneideinsatzes innerhalb der Lebensmittelzerkleinerungsvorrichtung verwendet.

Besonders vorteilhaft ist ein Set, das aus mehreren, unterschiedlichen Schneideinsätzen besteht. Ein solches Set ist besonders flexibel für eine Vielzahl von unterschiedlichen Schneidanforderungen einsetzbar. Besonders vorteilhaft ist eine Lebensmittelzerkleinerungsvorrichtung, die mit einem Schneideinsatz und/oder mit einem Set aus, auswechselbaren Schneideinsätzen dem Benutzer zur Verfügung gestellt wird.

In vorteilhafter Weise kann eine solche Lebensmittelzerkleinerungsvorrichtung einen Pressstempel zum Hindurchdrücken von zu zerkleinerndem Gut durch den jeweiligen Schneideinsatz - insbesondere durch die in einer Arbeitsposition befindliche Schneidklingenanordnung - aufweisen.

In vorteilhafter Weise kann der Pressstempel beispielsweise an einem schwenkbar gelagerten Presshebel angeordnet sein.

Bei einer besonderen Ausführungsform ist der Pressstempel abnehmbar an einem schwenkbar gelagerten Presshebel angeordnet.

Der Pressstempel kann vorteilhaft eine Vielzahl von Schlitzen aufweisen, in die die Schneidklingen während des Schneidvorgangs eintauchen. Insbesondere kann vorgesehen sein, dass der Pressstempel Schlitze aufweist, die die Verwendung einer Vielzahl unterschiedlich angeordneter Schneidklingenanordnungen erlaubt. Hierbei muss nicht vorgesehen sein, dass bei jeder Schneidklingenanordnung stets in sämtliche Schlitze des Pressstempels auch Schneidklingen eintauchen.

Bei einer vorteilhaften Ausführungsform einer erfindungsgemäßen Lebensmittelzerkleinerungsvorrichtung ist außer dem Pressstempel ein weiterer Pressstempel vorgesehen. Auch der weitere Pressstempel kann vorteilhaft an einem schwenkbar gelagerten Presshebel - insbesondere abnehmbar - angeordnet sein.

Bei einer besonderen Ausführungsform sind der Pressstempel und der weitere Pressstempel gemeinsam an einem schwenkbar gelagerten Presshebel angeordnet. Diese Ausführungsform ermöglicht es, zwei Schneidklingenanordnungen eines Schneideinsatzes gleichzeitig zu verwenden. Eine solche Lebensmittelzerkleinerungsvorrichtung weist demgemäß zwei voneinander unterschiedliche Arbeitsbereiche auf. Durch Abnehmen eines der beiden Pressstempel kann eine solche Lebensmittelzerkleinerungsvorrichtung in einfacher und flexibler Weise jederzeit umgerüstet werden.

Wie bereits erwähnt, kann bei einer vorteilhaften Ausführungsform der erfindungsgemäßen Lebensmittelzerkleinerungsvorrichtung wahlweise entweder die erste Schneidklingenanordnung oder die zweite Schneidklingenanordnung in einem Wirkbereich, insbesondere einem Schwenkbereich, des Pressstempels positioniert oder festgelegt werden.

Insbesondere kann vorgesehen sein, dass je nach Schneidanforderung der Schneideinsatz wahlweise in einer ersten Stellung oder in einer von der ersten Stellung verschiedenen zweiten Stellung in die Lebensmittelzerkleinerungsvorrichtung einsetzbar ist.

Hierbei kann in vorteilhafter Weise vorgesehen sein, dass in der ersten Stellung die erste Schneidklingenanordnung und in der zweiten Stellung die zweite Schneidklingenanordnung in dem Wirkbereich, insbesondere dem Schwenkbereich, des Pressstempels - je nach Schneidanforderung - positionierbar ist. Alternativ oder zusätzlich kann vorgesehen sein, dass in der ersten Stellung die zweite Schneidklingenanordnung und in der zweiten Stellung die erste Schneidklingenanordnung in dem Wirkbereich, insbesondere dem Schwenkbereich, des weiteren Pressstempels positionierbar ist.

Bei einer ganz besonders vorteilhaften und einfach zu bedienenden Ausführungsform der erfindungsgemäßen Lebensmittelzerkleinerungsvorrichtung ist vorgesehen, dass sich die erste Stellung von der zweiten Stellung durch einen - insbesondere in der Schneidklingenebene, also insbesondere bezogen auf eine zur Schneidklingenebene senkrechte, gedachte Drehachse - um 180° gedrehten Schneideinsatz unterscheiden. Alternativ oder zusätzlich kann vorgesehen sein, dass sich die erste Stellung und die zweite Stellung durch dieselbe Position des Schneideinsatzes auszeichnen, sich jedoch um eine um 180° verschiedene Orientierung unterscheiden.

Eine vorteilhafte Ausführungsform der Lebensmittelzerkleinerungsvorrichtung weist eine Aufnahme auf, in die der Schneideinsatz - vorzugsweise wieder entnehmbar - eingesetzt ist und/oder einsetzbar ist.

Insbesondere kann vorgesehen sein, dass der Schneideinsatz wahlweise mit einer ersten Orientierung oder mit einer zweiten Orientierung in die Aufnahme einsetzbar ist. Auf diese Weise kann - je nach Schneidanforderung - sehr einfach, schnell und zuverlässig die benötigte Schneidklingenanordnung in die Arbeitsposition verbracht und dort positioniert werden.

Die erfindungsgemäße Lebensmittelzerkleinerungsvorrichtung kann vorteilhaft als Deckel ausgebildet sein, der auf ein Gefäß - vorzugsweise die Gefäßöffnung vollständig abdeckend - aufsetzbar und/oder an einem Gefäß - vorzugsweise die Gefäßöffnung vollständig abdeckend - festlegbar ist. In diesem Sinne ist ein Küchengerät mit einer solchen Lebensmittelzerkleinerungsvorrichtung, die deckelartig auf ein Gefäß, insbesondere auf eine Schüssel, aufsetzbar und/oder an dieser befestigbar ist, von besonderem Vorteil.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.
- Fig. 1: eine nicht erfindungsgemäßen Schneideinsatz und
- Fig. 2: eine erfindungsgemäße Lebensmittelzerkleinerungsvorrichtung mit einem nicht erfindingsgemäßen Schneideinsatz.

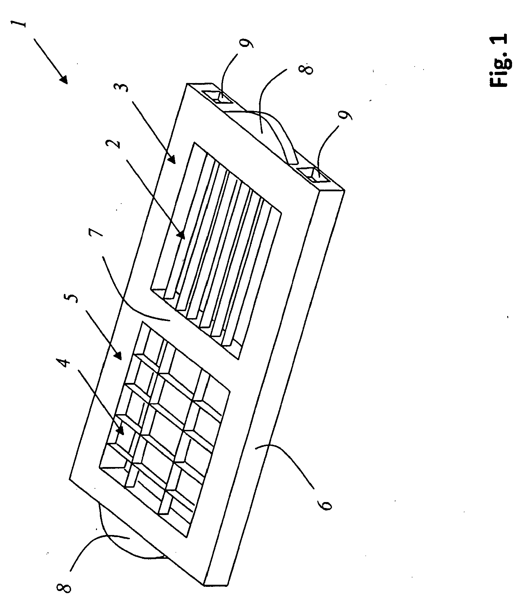

Fig. 1 zeigt einen Schneideinsatz 1 mit einer ersten Schneidklingenanordnung 2, die in einem ersten Bereich 3 angeordnet ist und mit einer zweiten Schneidklingenanordnung 4, die in einem zweiten Bereich 5 angeordnet ist. Die erste Schneidklingenanordnung 2 und die zweite Schneidklingenanordnung 4 sind gemeinsam in einem Rahmen 6 gehalten und durch einen stabilisierenden Zwischensteg 7 voneinander getrennt.

An den Schmalseiten weist der Schneideinsatz 1 jeweils einen Griff 8 auf. Darüber hinaus sind Verbindungselemente 9 vorgesehen, die dazu ausgebildet sind, mit Gegenverbindungselementen einer Lebensmittelzerkleinerungsvorrichtung zusammenzuwirken.

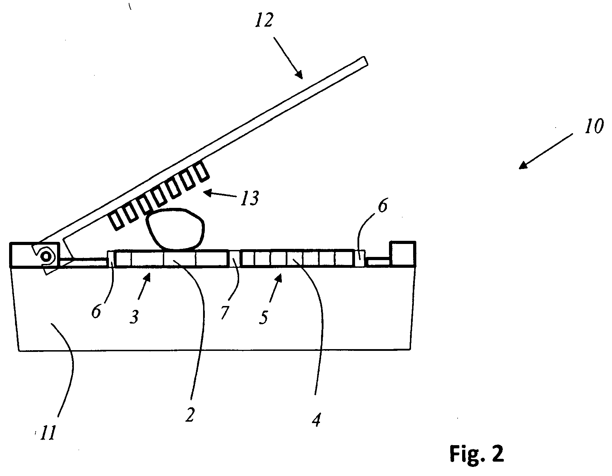

Fig. 2 zeigt eine erfindungsgemäße Lebensmittelzerkleinerungsvorrichtung 10 mit einem nicht erfindungsgemäßen Schneideinsatz 1. Die Lebensmittelzerkleinerungsvorrichtung 10 ist deckelartig ausgebildet und auf ein Gefäß 11 rastbar aufsetzbar. Die Lebensmittelzerkleinerungsvorrichtung weist einen verschwenkbar gelagerten Presshebel 12 mit einem Pressstempel 13 auf.

In der gezeigten Stellung befindet sich eine erste Schneidklingenanordnung 2 des Schneideinsatzes 1 im Schwenkbereich des Pressstempels 13 und damit in Arbeitsposition. Der Schneideinsatz 1 weist eine zweite Schneidklingenanordnung 4 auf, die durch Drehen des Schneideinsatzes 1 um 180° in der Schneidebene in die Arbeitsposition, das heißt in den Schwenkbereich des Pressstempels 13, gebracht werden kann. Die erste Schneidklingenanordnung 2 und die zweite Schneidklingenanordnung 4 weisen Schneidklingen mit unterschiedlichem Klingenabstand und mit unterschiedlichem Klingenmuster auf.

## Patentansprüche

1. Lebensmittelzerkleinerungsvorrichtung (10) mit einem Schneideinsatz (1) mit einer ersten Schneidklingenanordnung (2), wobei die Lebensmittelzerkleinerungsvorrichtung (10) einen
Pressstempel (13) zum Hindurchdrücken von zu zerkleinerndem Gut durch den Schneideinsatz (1) aufweist, wobei die erste Schneidklingenanordnung (2) in einem ersten Bereich (3) des Schneideinsatzes (1) angeordnet ist und ein zweiter, von dem ersten Bereich (3) verschiedener Bereich eine zweite Schneidklingenanordnung (4) aufweist, **dadurch gekennzeichnet, dass** die erste Schneidklingenanordnung (2) und/oder die zweite Schneidklingenanordnung (4) mehrere in unterschiedlichen Ebenen übereinander angeordnete Schneidklingen aufweisen und dass der Pressestempel (13) zum Hindurchdrücken von zu zerkleinernden Gut schwenkbar ist.

2. Lebensmittelzerkleinerungsvorrichtung (10) nach Anspruch 1, **dadurch gekennzeichnet, dass** die erste Schneidklingenanordnung (2) einen anderen Klingenabstand und/oder eine andere Klingenausrichtung und/oder ein anderes Klingenmuster und/oder andere Klingentypen aufweist, als die zweite Schneidklingenanordnung (4) und/oder dass die erste Schneidklingenanordnung und die zweite Schneidklingenanordnung, insbesondere voneinander beabstandet, in einem gemeinsamen Rahmen angeordnet sind.

3. Lebensmittelzerkleinerungsvorrichtung (10) nach Anspruch 1 oder 2, **dadurch gekennzeichnet, dass** die erste Schneidklingenanordnung (2) und die zweite Schneidklingenanordnung (4) durch einen Zwischensteg (7) voneinander getrennt sind und/oder dass der Schneideinsatz (1) Verbindungselemente, insbesondere Rastvorsprünge und/oder Rastausnehmungen, aufweist, die dazu ausgebildet und bestimmt sind, mit Gegenverbindungselementen der Lebensmittelzerkleinerungsvorrichtung (10) zusammen zu wirken.

4. Lebensmittelzerkleinerungsvorrichtung (10) nach einem der Ansprüche 1 bis 3, **dadurch gekennzeichnet, dass** der Schneideinsatz (1) abgesehen von Unterschieden der Schneidklingenanordnungen symmetrisch, insbesondere spiegelsymmetrisch, ausgebildet ist oder der Schneideinsatz (1) zumindest einen Griff und/oder einen Griffbereich aufweist.

5. Lebensmittelzerkleinerungsvorrichtung (10) nach einem der Ansprüche 1 bis 4, **dadurch gekennzeichnet, dass**
a. die erste Schneidklingenanordnung (2) und/oder die zweite Schneidklingenanordnung (4) gitterförmig angeordnete oder sternförmig angeordnete oder gekreuzt angeordnete Schneidklingen aufweisen
b. und/oder dass die erste Schneidklingenanordnung (2) und/oder die zweite Schneidklingenanordnung (4) Schneidklingen mit einem Wellenschliff aufweisen.

6. Lebensmittelzerkleinerungsvorrichtung (10) nach einem der Ansprüche 1 bis 5, **dadurch gekennzeichnet, dass** der Pressstempel (13) an einem schwenkbar gelagerten Presshebel angeordnet ist und/oder dass der Pressstempel (13) abnehmbar an einem schwenkbar gelagerten Presshebel angeordnet ist.

7. Lebensmittelzerkleinerungsvorrichtung (10) nach Anspruch 1 bis 6, **dadurch gekennzeichnet, dass** ein weiterer Pressstempel vorgesehen ist.

8. Lebensmittelzerkleinerungsvorrichtung (10) nach Anspruch 7, **dadurch gekennzeichnet, dass** der weitere Pressstempel an einem schwenkbar gelagerten Presshebel angeordnet ist und/oder dass der weitere Pressstempel abnehmbar an einem schwenkbar gelagerten Presshebel angeordnet ist und/oder dass der Pressstempel und der weitere Pressstempel gemeinsam an einem schwenkbar gelagerten Presshebel angeordnet sind.

9. Lebensmittelzerkleinerungsvorrichtung (10) nach einem der Ansprüche 1 bis 8, **dadurch gekennzeichnet, dass** wahlweise entweder die erste Schneidklingenanordnung (2) oder die zweite Schneidklingenanordnung (4) in dem Wirkbereich, insbesondere einem Schwenkbereich, des Pressstempels (13) positionierbar und/oder festlegbar ist und/oder dass der Schneideinsatz (1) wahlweise in einer ersten Stellung oder in einer von der ersten Stellung verschiedenen zweiten Stellung in die Lebensmittelzerkleinerungsvorrichtung (10) einsetzbar ist.

10. Lebensmittelzerkleinerungsvorrichtung (10) nach Anspruch 9, **dadurch gekennzeichnet, dass** in der ersten Stellung die erste Schneidklingenanordnung (2) und in der zweiten Stellung die zweite Schneidklingenanordnung (4) in dem Wirkbereich, insbesondere einem Schwenkbereich, des Pressstempels (13) positioniert ist und/oder dass in der ersten Stellung die zweite Schneidklingenanordnung (4) und in der zweiten Stellung die erste Schneidklingenanordnung (2) in dem Wirkbereich, insbesondere einem Schwenkbereich, des weiteren Pressstempels positioniert ist.

11. Lebensmittelzerkleinerungsvorrichtung (10) nach Anspruch 9 oder 10, **dadurch gekennzeichnet, dass** sich die erste Stellung von der zweiten Stellung durch einen - insbesondere in der Schneidklingenebene - um 180 Grad gedrehten Schneideinsatz (1) unterscheiden und/oder dass die erste Stellung und die zweite Stellung sich durch dieselbe Position des Schneideinsatzes (1) auszeichnen, sich jedoch um eine um 180 Grad verschiedene Orientierung unterscheiden.

12. Lebensmittelzerkleinerungsvorrichtung (10) nach einem der Ansprüche 1 bis 11, **dadurch gekennzeichnet, dass** die Lebensmittelzerkleinerungsvorrichtung (10) eine Aufnahme aufweist, in die der Schneideinsatz (1) - vorzugsweise wieder entnehmbar - eingesetzt ist und/oder in die der Schneideinsatz (1) - vorzugsweise wieder entnehmbar - einsetzbar ist.

13. Lebensmittelzerkleinerungsvorrichtung (10) nach Anspruch 12, **dadurch gekennzeichnet, dass** der Schneideinsatz (1) wahlweise mit einer ersten Orientierung oder mit einer zweiten Orientierung in die Aufnahme einsetzbar ist.

## Claims

1. Foodstuff chopping apparatus (10) with a cutting insert (1) with a first cutting blade arrangement (2), the foodstuff chopping apparatus (10) having a pressing punch (13) for pushing material to be chopped through the cutting insert (1), the first cutting blade arrangement (2) being arranged in a first region (3) of the cutting insert (1), and having a second region, which is different from the first region (3), having a second cutting blade arrangement (4), **characterized in that** the first cutting blade arrangement (2) and/or the second cutting blade arrangement (4) have a plurality of cutting blades which are arranged one above another in different planes, and **in that** the pressing punch (13) can be pivoted for pushing through material to be chopped.

2. Foodstuff chopping apparatus (10) according to Claim 1, **characterized in that** the first cutting blade arrangement (2) has a different blade spacing and/or a different blade orientation and/or a different blade pattern and/or different blade types from the second cutting blade arrangement (4) and/or **in that** the first cutting blade arrangement and the second cutting blade arrangement are arranged, in particular spaced apart from each other, in a common frame.

3. Foodstuff chopping apparatus (10) according to Claim 1 or 2, **characterized in that** the first cutting blade arrangement (2) and the second cutting blade arrangement (4) are separated from each other by an intermediate web (7) and/or **in that** the cutting insert (1) has connecting elements, in particular latching projections and/or latching recesses, which are designed and intended to interact with mating connecting elements of the foodstuff chopping apparatus (10).

4. Foodstuff chopping apparatus (10) according to one of Claims 1 to 3, **characterized in that** the cutting insert (1) is formed symmetrically, in particular mirror-symmetrically, apart from differences in the cutting blade arrangements or the cutting insert (1) has at least one handle and/or a handle region.

5. Foodstuff chopping apparatus (10) according to one of Claims 1 to 4, **characterized in that**
a. the first cutting blade arrangement (2) and/or the second cutting blade arrangement (4) have cutting blades which are arranged in a grid-shaped manner or are arranged in a star-shaped manner or are arranged crosswise,
b. and/or **in that** the first cutting blade arrangement (2) and/or the second cutting blade arrangement (4) have cutting blades with a serrated edge.

6. Foodstuff chopping apparatus (10) according to one of Claims 1 to 5, **characterized in that** the pressing punch (13) is arranged on a pivotably mounted pressing lever, and/or **in that** the pressing punch (13) is arranged removably on a pivotably mounted pressing lever.

7. Foodstuff chopping apparatus (10) according to Claims 1 to 6, **characterized in that** a further pressing punch is provided.

8. Foodstuff chopping apparatus (10) according to Claim 7, **characterized in that** the further pressing punch is arranged on a pivotably mounted pressing lever, and/or **in that** the further pressing punch is arranged removably on a pivotably mounted pressing lever and/or **in that** the pressing punch and the further pressing punch are arranged together on a pivotably mounted pressing lever.

9. Foodstuff chopping apparatus (10) according to one of Claims 1 to 8, **characterized in that** alternatively either the first cutting blade arrangement (2) or the second cutting blade arrangement (4) is positionable and/or fixable in the operative region, in particular a pivoting region, of the pressing punch (13) and/or **in that** the cutting insert (1) is insertable into the foodstuff chopping apparatus (10) alternatively in a first position or in a second position, which is different from the first position.

10. Foodstuff chopping apparatus (10) according to Claim 9, **characterized in that**, in the first position, the first cutting blade arrangement (2) is positioned in the operative region, in particular a pivoting region, of the pressing punch (13), and, in the second position, the second cutting blade arrangement (4) is positioned therein and/or **in that**, in the first position, the second cutting blade arrangement (4) is positioned in the operative region, in particular a pivoting region, of the further pressing punch, and, in the second position, the first cutting blade arrangement (2) is positioned therein.

11. Foodstuff chopping apparatus (10) according to Claim 9 or 10, **characterized in that** the first position differs from the second position by a cutting insert (1) rotated by 180 degrees - in particular in the cutting blade plane and/or **in that** the first position and the second position are distinguished by the same position of the cutting insert (1), but differ by an orientation which differs by 180 degrees.

12. Foodstuff chopping apparatus (10) according to one of Claims 1 to 11, **characterized in that** the foodstuff chopping apparatus (10) has a receptacle into which the cutting insert (1) is inserted - preferably so as to be removable again, and/or into which the cutting insert (1) is insertable - preferably so as to be removable again.

13. Foodstuff chopping apparatus (10) according to Claim 12, **characterized in that** the cutting insert (1) is insertable alternatively with a first orientation or with a second orientation into the receptacle.

## Revendications

1. Dispositif de hachage d'aliments (10) comprenant un insert de coupe (1) avec un premier agencement de lame de coupe (2), le dispositif de hachage d'aliments (10) présentant un pilon (13) pour presser le produit à hacher à travers l'insert de coupe (1), le premier agencement de lame de coupe (2) étant disposé dans une première région (3) de l'insert de coupe (1) et une deuxième région différente de la première région (3) présentant un deuxième agencement de lame de coupe (4), **caractérisé en ce que** le premier agencement de lame de coupe (2) et/ou le deuxième agencement de lame de coupe (4) présentent plusieurs lames de coupe disposées les unes-au-dessus des autres dans des plans différents et **en ce que** le pilon (13) peut être pivoté pour presser le produit à hacher.

2. Dispositif de hachage d'aliments (10) selon la revendication 1, **caractérisé en ce que** le premier agencement de lame de coupe (2) présente un autre espacement de lame et/ou une autre orientation de lame et/ou un autre motif de lame et/ou d'autres types de lames que le deuxième agencement de lame de coupe (4) et/ou **en ce que** le premier agencement de lame de coupe et le deuxième agencement de lame de coupe sont disposés, en particulier à distance l'un de l'autre, dans un cadre commun.

3. Dispositif de hachage d'aliments (10) selon la revendication 1, **caractérisé en ce que** le premier agencement de lame de coupe (2) et le deuxième agencement de lame de coupe (4) sont séparés l'un de l'autre par une nervure intermédiaire (7) et/ou en ce que l'insert de coupe (1) présente des éléments de connexion, en particulier des saillies d'encliquetage et/ou des évidements d'encliquetage, qui sont aptes et destinés à coopérer avec des éléments de connexion conjugués du dispositif de hachage d'aliments (10).

4. Dispositif de hachage d'aliments (10) selon l'une quelconque des revendications 1 à 3, **caractérisé en ce que** l'insert de coupe (1), à l'exception des différences entre les agencements de lame de coupe, est réalisé sous forme symétrique, notamment avec symétrie spéculaire, ou l'insert de coupe (1) présente au moins une poignée et/ou une zone de préhension.

5. Dispositif de hachage d'aliments (10) selon l'une quelconque des revendications 1 à 4, **caractérisé en ce que**
a. le premier agencement de lame de coupe (2) et/ou le deuxième agencement de lame de coupe (4) présentent des lames de coupe disposées en forme de grille ou en forme d'étoile ou croisées,
b. et/ou **en ce que** le premier agencement de lame de coupe (2) et/ou le deuxième agencement de lame de coupe (4) présentent des lames de coupe avec un profil ondulé.

6. Dispositif de hachage d'aliments (10) selon l'une quelconque des revendications 1 à 5, **caractérisé en ce que** le pilon (13) est disposé sur un levier de pressage monté pivotant, et/ou **en ce que** le pilon (13) est disposé de manière amovible sur un levier de pressage monté pivotant.

7. Dispositif de hachage d'aliments (10) selon les revendications 1 à 6, **caractérisé en ce que** l'on prévoit un pilon supplémentaire.

8. Dispositif de hachage d'aliments (10) selon la revendication 7, **caractérisé en ce que** le pilon supplémentaire est disposé sur un levier de pressage monté pivotant et/ou **en ce que** le pilon supplémentaire est disposé de manière amovible sur un levier de pressage monté pivotant et/ou le pilon et le pilon supplémentaire sont disposés ensemble sur un levier de pressage monté pivotant.

9. Dispositif de hachage d'aliments (10) selon l'une quelconque des revendications 1 à 8, **caractérisé en ce que** le premier agencement de lame de coupe (2) ou le deuxième agencement de lame de coupe (4) peut être positionné et/ou fixé de manière sélective dans la région d'action, notamment une région de pivotement, du pilon (13) et/ou **en ce que** l'insert de coupe (1) peut être inséré de manière sélective dans une première position ou dans une deuxième position différente de la première position dans le dispositif de hachage d'aliments (10).

10. Dispositif de hachage d'aliments (10) selon la revendication 9, **caractérisé en ce que** dans la première position, le premier agencement de lame de coupe (2), et dans la deuxième position, le deuxième agencement de lame de coupe (4), sont respectivement positionnés dans la région d'action, notamment une région de pivotement, du pilon (13) et/ou **en ce que** dans la première position, le deuxième agencement de lame de coupe (4), et dans la deuxième position, le premier agencement de lame de coupe (2), sont respectivement positionnés dans la région d'action, notamment une région de pivotement, du pilon supplémentaire.

11. Dispositif de hachage d'aliments (10) selon la revendication 9 ou 10, **caractérisé en ce que** la première position se distingue de la deuxième position par un insert de coupe (1) tourné de 180 degrés - en particulier dans le plan de la lame de coupe - et/ou **en ce que** la première position et la deuxième position se caractérisent par la même position de l'insert de coupe (1) mais se différencient toutefois par une orientation différente de 180 degrés.

12. Dispositif de hachage d'aliments (10) selon l'une quelconque des revendications 1 à 11, **caractérisé en ce que** le dispositif de hachage d'aliments (10) présente un logement dans lequel l'insert de coupe (1) est inséré de préférence de manière amovible et/ou dans lequel l'insert de coupe (1) peut être inséré de préférence de manière amovible.

13. Dispositif de hachage d'aliments (10) selon la revendication 12, **caractérisé en ce que** l'insert de coupe (1) peut être inséré de manière sélective avec une première orientation ou avec une deuxième orientation dans le logement.
